# EUROPEAN PATENT SPECIFICATION

(11) **EP 1 970 231 B1**
(45) Date of publication and mention of the grant of the patent: **22.09.2010**
(21) Application number: 08102585.0
(22) Date of filing: 13.03.2008
(51) Int. Cl.: B60H 1/00

(54) **Air guiding housing**
Luftführungsgehäuse
Boitier de guidage d'air

(30) Priority: 15.03.2007 DE 102007012519
(43) Date of publication of application: 17.09.2008
(73) Proprietor: Valeo Klimasysteme GmbH, 96476 Bad Rodach (DE)
(72) Inventor: Weber, Jens, 96515, Sonneberg (DE)
(74) Representative: Léveillé, Christophe

(56) References cited:
- EP-A- 1 510 380
- FR-A- 2 505 268
- FR-A- 2 507 707
- FR-A- 2 875 868
- GB-A- 2 017 896

## Description

The present invention concerns an air conditioner housing, in particular a car heating and ventilation device, including at least two housing parts, where the housing parts can be fastened positively to the device by means of at least one tongue and groove connection.

In the construction of air conditioner housings, technicians must in particular take into consideration that housing parts need to be installed as rapidly as possible, that a sufficient level of sealing needs to be achieved, and must further take into consideration the amount of space available in the car for installation, maintenance and suchlike.

State of the art air conditioners are usually manufactured with several housing parts. Here a sealing connection is often achieved by means of a self clipping device enclosing housing parts, or by bolting, sticking or welding together, or similar.

This is not a satisfactory solution as either air conditioner housing assembly becomes laborious or requires additional parts, making it relatively costly, or, for example in the case of self clipping devices, must include sufficient space for closing or opening such self-clipping devices.
A state of the art air conditioner housing is known from FR 2505268, which is considered as the closest prior art, and from FR 2 875 868.

Accordingly, the present invention is intended to make possible manufacture of air conditioner housing units that can be easily and rapidly assembled without needing any of the additional assembly procedures described above, and in particular without requiring extra space for the assembly or disassembly of housing parts.

In particular, the present invention proposes an air conditioner housing, especially for a car heating, ventilation and/or air conditioner device, that includes at least two housing parts, wherein the housing parts can be fastened positively together by means of at least one tongue and groove connection, and wherein the first housing part is provided, at least in a local area, with a latch nib as an extension of said tongue that can be meshed into a notch provided in the groove, characterized in that said tongue fits into a groove in the second housing part.

In other words, the present invention proposes the construction of a connection facility for at least two housing
parts in which the connecting parts are included in the tongue and groove connection itself.

Here, in particular, one housing part is equipped with a type of tongue that fits into a groove provided for this purpose on the other housing part. By suitably chosen geometry, the tongue and groove surfaces provided for this purpose form a so-called labyrinth seal. The labyrinth seal can be equipped with additional sealing devices, such as sealing lips or suchlike.

It should be noted that the average technician will not normally take this into consideration, as the average technician wants to obtain the greatest possible seal between housing parts, and thus no sealing materials are provided on or in the tongue and groove connection, as this could reduce the sealing function.

Furthermore, a latching mechanism can also be fitted on the entire extent of the tongue and groove connection. In other words, essentially the entire running surface of the tongue and groove connection can be equipped with a latching mechanism. This could, for example, be advantageous in air conditioner housing units that are to be operated under high pressure or exposed to intense vibrations.

With the present proposed housing part connection no additional space will be required for assembly or maintenance as there will be no lateral self clipping mechanisms or such that must be taken into consideration since a latching mechanism is included in the area of the tongue and groove connection itself.

Moreover, by means of the proposed latching mechanism, housing parts are snapped on with force precisely in the area where a seal is required. Thus no extra reinforcements or similar need to be fitted on housing parts to channel the force towards the sealing area.

It can be seen that with the proposed invention there is no longer any need for additional procedure steps such as, for example, sticking or welding together.

The latch nib presents a surface that interacts advantageously with the surface area of the tongue in that its spring action presses it onto the other housing part.

The envisioned surfaces can be rounded, bevelled or similarly fitted. The important aspect of the surface geometry is that bringing the surfaces together causes the tongue to be pressed onto the other housing part. As a result a certain tolerance range for pressing the tongue into the other housing part can be established so as to achieve a sufficient seal, and this with a simpler assembly procedure.

The preferred design is to construct the latch nib as an extension of the tongue. In this way the latch nib can be inserted in the groove along the extension direction of the tongue, which requires a particularly simple geometry that is also easy to manufacture.

Furthermore, it is advantageous that the notch defines a passage opening through which the latch nib is inserted. In this way a final connection of the housing parts is only achieved after the latch nib is completely inserted through the groove, or passage opening. The positioning that results in an optimal connection can thus be perceived easily on assembly. Moreover, such a geometry is particularly simple to manufacture.

The latch nib is favourably curved vertically with respect to the latching direction. With this curved latch nib design the latch nib is hardly deformed on assembly, but rather the groove is pushed outwards. Thus there is only a small to negligible risk that the latch nib will be deformed or broken on assembly.

In an advantageous design the latch nib will have at least one area with a saw tooth profile. In this manner the saw tooth profile interacts with one surface area of the tongue so that the housing parts concerned can be connected together stepwise. Final latching will, for example, only take place after all fitted latching connections, or tongue and groove connections, are brought together, allowing the possibility of making certain corrections as regards positioning during assembly.

Furthermore it would be advantageous to fit sealing lips on all housing parts in the area where the latch nib is inserted through the passage opening. This would be the simplest way to provide any required sealing function, or increase sealing effectiveness.

Moreover, it would be advantageous to manufacture housing parts using an injection moulding process, which would make it possible to manufacture air conditioner housing units based on the invention quite cheaply and easily. In addition, with the so-called two-component injection moulding process, sealing lips or sealing laminations can be made in one process step.

Further advantages and characteristics of the present invention will be given in the following description of currently preferred designs. The examples in the description are based on the attached drawings, where:
Figure 1 shows a cross section of a tongue and groove connection for connecting two housing parts of an air conditioner housing based on the invention,
Figure 2 shows another cross section of the tongue and groove connection of Figure 1,
Figure 3 shows another cross section of a top view of the tongue and groove connection of Figure 2.

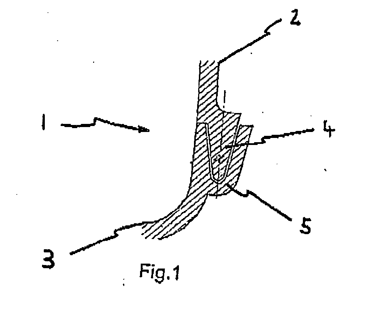

In Figure 1 is shown a cross section of a tongue and groove connection (1) for the connection of a first housing part (2) to a second housing part (3) of an air conditioner housing based on to the invention. The tongue and groove connection (1) is, in general, so designed that housing parts (2) and (3) can be fastened together.

The first housing part (2) is equipped with a tongue (4) that fits into a groove in the second housing part (3). By the insertion of tongue (4) into groove (5) a so-called labyrinth seal is created between housing parts (2) and (3) so that a satisfactory seal is achieved.

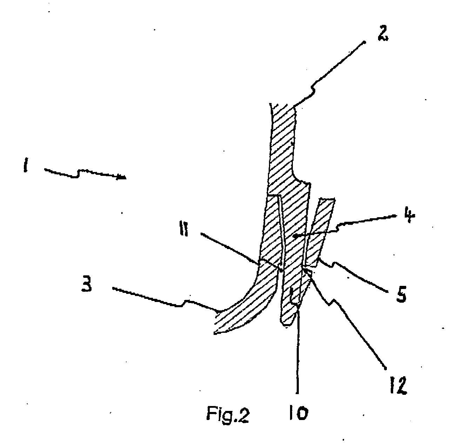

In Figure 2 is shown a cross section of the tongue and groove connection (1) of Figure 1 at the place where latching occurs. Identical parts are assigned the same reference numbers.

In Figure 2 is shown how housing parts (2) and (3) can be brought to fit tightly to together. The first housing part (2) is fitted with a latch nib (10), as an extension of tongue (4), which can be inserted into a notch (11) in the second housing part (3). The notch (11) is designed as a passage opening through the second housing part (3) so that the latch nib (10) after passing through the passage opening can latch onto groove (5) at this location, thus locking housing parts (2) and (3) together.

Latch nib (10) is fitted with a rearwards-gripping surface (12) that engages with the groove (5). The rearwards-gripping surface (12) is bevelled so that, within a certain tolerance range, a force is always exerted on tongue (4), pressing tongue (4) onto the second housing part (3). In this way a sufficient seal between housing parts (2) and (3) is achieved, since a labyrinth seal is thus formed.

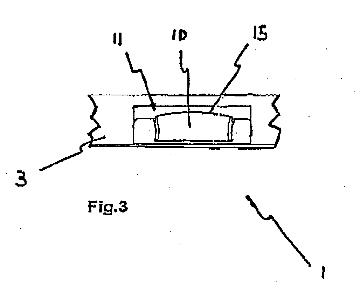

In Figure 3 is shown a cross section of a top view of the tongue and groove connection (1) of Figure 2. Identical parts are again assigned the same reference numbers.

In Figure 3 is shown how latch nib (10) has been inserted through the passage opening of notch (11) of tongue (5) with a corresponding latching effect. A bulge (15) can be seen on latch nib (10) in a vertical direction with respect to the latching direction.

On assembly, latch nib (10) is inserted through the passage opening of notch (11) in tongue (5). Due to the design of latch nib (10), with its bulge (15), the latch nib (10) is hardly deformed on assembly, but it is rather groove (5) that is deformed, being pushed outwards. As latch nib (10), in its assembled position, lies immediately contiguous with housing part (3), it cannot be loosed by the displacement of latch nib (10), so that any unintentional loosening of the connection can just about be excluded. Moreover, as latch nib (10) is not deformed to any significant extent during assembly, there is no danger of its breaking.

In summary, it can be seen that, as opposed to earlier procedures, the invention concept is based on making possible a connection between housing parts, which connection is included in the housing parts themselves, namely in the sealing tongue and groove connection.

Although the present invention has been fully described above with respect to a preferred design, technicians should realize that different possibilities for alteration are possible within the framework of the present claims without deviating from the invention concept and the protection claimed. In particular, technicians should recognize that exact duplication of the geometric design is not the important factor, but rather the functionality made possible, and that this space-saving functionality, in contradistinction to previous basic approaches, is brought about by the tongue and groove connection.

## Claims

1. An air conditioner housing, in particular for car heating, ventilation and/or air conditioning units, including at least two housing parts (2, 3), wherein the housing parts (2, 3) can be fastened positively together by means of at least one tongue and groove connection (1, 4, 5), and wherein the first housing part (2) is provided, at least in a local area, with a latch nib (10) as an extension of said tongue (4) which can be meshed with a notch (11) provided in the groove (5), **characterized in that** said tongue (4) fits into a groove (5) in the second housing part (3).

2. An air conditioner housing according to claim 1, wherein the latch nib (10) contains a surface (12) that interacts with a groove (5) surface in such a way that the tongue (4) is pressed onto the other housing part (3).

3. An air conditioner housing according to one of the claims 1 to 2, wherein the notch (11) defines a passage opening through which the latch nib (10) can be inserted.

4. An air conditioner housing according to one of the claims 1 to 3, wherein the latch nib (10) is curved in a vertical direction with respect to the latching direction.

5. An air conditioner housing according to one of the claims 1 to 4, wherein the latch nib (10) contains at least one area with a saw tooth profile.

6. An air conditioner housing according to one of the claims 3 to 5, wherein in the area in which the latch nib (10) is passed through the passage opening, housing parts (2, 3) are each fitted with sealing lips.

7. An air conditioner housing according to one of the claims 1 to 6, wherein the housing parts (2, 3) are manufactured by means of an injection moulding process.

## Patentansprüche

1. Klimaanlagengehäuse, insbesondere für Heizungs-, Außenluft- und/oder Klimaanlagen in Kraftfahrzeugen, mit mindestens zwei Gehäuseteilen (2, 3), wobei die Gehäuseteile (2, 3) mittels mindestens einer Nut- und Federverbindung (1, 4, 5) formschlüssig aneinander befestigt werden können und wobei der erste Gehäuseteil (2) mindestens in einem örtlichen Bereich mit einer Rastnase (10) als eine Verlängerung der Feder (4) versehen ist, die in eine in der Nut (5) vorgesehene Kerbe (11) eingreifen kann, **dadurch gekennzeichnet, dass** die Feder (4) in eine Nut (5) im zweiten Gehäuseteil (3) passt.

2. Klimaanlagengehäuse nach Anspruch 1, wobei die Rastnase (10) eine Fläche (12) enthält, die mit einer Nutfläche (5) so zusammenwirkt, dass die Feder (4) auf den anderen Gehäuseteil (3) gedrückt wird.

3. Klimaanlagengehäuse nach einem der Ansprüche 1 bis 2, wobei die Kerbe (11) eine Durchgangsöffnung definiert, durch die die Rastnase (10) eingeführt werden kann.

4. Klimaanlagengehäuse nach einem der Ansprüche 1 bis 3, wobei die Rastnase (10) in einer vertikalen Richtung bezüglich der Rastrichtung gebogen ist.

5. Klimaanlagengehäuse nach einem der Ansprüche 1 bis 4, wobei die Rastnase (10) mindestens einen Bereich mit einem Sägezahnprofil enthält.

6. Klimaanlagengehäuse nach einem der Ansprüche 3 bis 5, wobei die Gehäuseteile (2, 3) in dem Bereich, in dem die Rastnase (10) durch die Durchgangsöffnung geführt wird, jeweils mit Dichtlippen versehen sind.

7. Klimaanlagengehäuse nach einem der Ansprüche 1 bis 6, wobei die Gehäuseteile (2, 3) mittels eines Spritzgussverfahrens hergestellt sind.

## Revendications

1. Boîtier de climatiseur, en particulier pour les unités de chauffage, ventilation et/ou climatisation automobiles, comprenant au moins deux pièces (2, 3) de boîtier, dans laquelle on peut fixer positivement l'une à l'autre les pièces (2, 3) de boîtier au moyen d'une liaison à rainure et languette (1, 4, 5) et dans laquelle la première pièce (2) de boîtier est dotée, au moins dans une zone ponctuelle, d'un ergot (10) de verrouillage qui est un prolongement de ladite languette (4) et peut s'enclencher avec une entaille (11) disposée dans la rainure (5), **caractérisée en ce que** ladite languette (4) entre dans la rainure (5) dans la seconde pièce (3) de boîtier.

2. Boîtier de climatiseur selon la revendication 1, dans laquelle l'ergot (10) de verrouillage comporte une surface (12) qui interagit avec une surface de la rainure (5) de telle façon que la languette (4) soit pressée sur l'autre pièce (3) de boîtier.

3. Boîtier de climatiseur selon l'une des revendications 1 et 2, dans laquelle l'entaille (11) délimite une ouverture de passage à travers laquelle on peut introduire l'ergot (10) de verrouillage.

4. Boîtier de climatiseur selon l'une des revendications 1 à 3, dans laquelle l'ergot (10) de verrouillage est courbé dans une direction verticale par rapport à la direction de verrouillage.

5. Boîtier de climatiseur selon l'une des revendications 1 à 4, dans laquelle l'ergot (10) de verrouillage comporte au moins une zone avec un profil en dents de scie.

6. Boîtier de climatiseur selon l'une des revendications 3 à 5, dans laquelle l'ergot (10) de verrouillage est enfilé à travers l'ouverture de passage et les pièces (2, 3) de boîtier sont chacune équipées de lèvres d'étanchéité.

7. Boîtier de climatiseur selon l'une des revendications 1 à 6, dans laquelle les pièces (2, 3) de boîtier sont fabriquées au moyen d'un processus de moulage par injection.
